# EUROPEAN PATENT SPECIFICATION

(11) **EP 3 051 624 B1**
(45) Date of publication and mention of the grant of the patent: **29.04.2020**
(21) Application number: 14848085.8
(22) Date of filing: 21.08.2014
(51) Int. Cl.: G06K 19/073, H01Q 1/52, H01Q 1/24

(54) **ANTENNA DEVICE AND TERMINAL**
ANTENNENVORRICHTUNG UND ENDGERÄT
DISPOSITIF D'ANTENNE ET TERMINAL

(30) Priority: 27.09.2013 CN 201320602986 U
(43) Date of publication of application: 03.08.2016
(73) Proprietor: Sanechips Technology Co., Ltd., Shenzhen, Guangdong 518085 (CN)
(72) Inventor: HU, Qilong, Shenzhen, Guangdong 518057 (CN); WANG, Wenli, Shenzhen, Guangdong 518057 (CN)
(74) Representative: Novagraaf Technologies
(86) International application number: PCT/CN2014/084953
(87) International publication number: WO 2015/043345

(56) References cited:
- CN-U- 202 009 072
- CN-U- 202 617 103
- DE-A1- 19 817 566
- JP-A- 2007 006 029

## Description

### Technical Field

The present disclosure relates to the field of communications, and in particular to an antenna device and a terminal.

### Background

Near Field Communication (NFC) is a non-contact identification and interconnection technology, which can perform short-distance wireless communication among mobile devices, consumer electronics, Personal Computers (PCs) and smart objects. The NFC provides a simple and touch-control solution, which enables consumers to exchange information, access content and services simply and intuitively. This technology is evolved from contactless Radio Frequency Identification (RFID), downwards compatible with RFID, and first is successfully developed by Sony and Philips respectively to mainly provide Machine to Machine (M2M) communication in handhold devices such as mobile phone. Since the NFC has a natural security, it is considered as having a great application prospect in fields such as mobile payment.

With the rapid development and popularity of mobile terminals (mainly referring to smart phones and portable tablet computers), mobile terminals are getting more and more important in people's life and their functions are becoming increasingly stronger. The appearance and development of new technology (such as RFID and NFC) has greatly changed people's living methods. Before, people need to use lots of secret keys, credit cards, electronic keys and so on in working, living and consuming processes, and now they can replace them by a mobile terminal. Since the NFC technology adopts a unique signal attenuation technology, which compared with the RFID has advantages of short distance, high bandwidth, low energy consumption and the like, it plays an enormous significance in fields such as access control, public traffic, mobile payment. The NFC communication mainly includes the following three modes:
1: active-active communication mode;
2: active-semiactive communication mode;
3: active-passive communication mode.

Since the NFC is a near field connection protocol, which provides easy, secure, rapid and automatic communications among various devices, it is often applied to a near field private communication mode, such as mobile payment, electronic key and so on. Therefore, compared with other communication protocols, the NFC communication has a higher demand on privacy. In related art, security measures generally are implemented from the aspect of encryption algorithm and encryption digital control, and this method only adapts to active terminal modes such as active-active mode and part active-semiactive modes; and since present mobile terminals often have Long Term Evolution (LTE)/Wireless Fidelity (WIFI)/Blue Tooth (BT)/NFC and other modes, some programs having ulterior motives will perform decryption confirmation through other modes of communication protocols, thereby deducting fee without the user's knowledge; moreover, since the security measures of the NFC generally are implemented from the aspect of encryption algorithm and encryption digital control, which only adapts to active terminal modes such as active-active mode, the encryption algorithm needs to be supported by software; therefore, many usage conditions requiring the terminal to be powered off or in a sleep state are impossible to realize.

In view of the above, there is no solution proposed for the problem in related art that the communication security of NFC can be implemented through software only.

DE 19817566 provides related technical solutions ; however, the above mentioned problem still remains unsolved.

### Summary

The invention is defined by the independent claim. Optional features are set out in the dependent claims.

Preferably, the moving device includes: a sliding support, on which the first part and the second part are disposed; a moving component, which is connected with the sliding support and is used to receive an external force to move the sliding support.

Preferably, the first position is located above the antenna.

Preferably, the first part is a metallic film, and/or the second part is a magnetic film.

According to another aspect of the embodiment of the present disclosure, a terminal is provided, including: an antenna and an antenna device described according to any one of claims 1 to 4.

Preferably, the terminal further includes: a back cover; the antenna device is located between the back cover and the antenna.

Preferably, a sliding groove is provided on the back cover; a switch part of the moving component is located in the sliding groove, and the switch part can move along the sliding groove after receiving an external force, thereby moving the sliding support.

Preferably, the antenna is an NFC antenna.

Through the embodiment of the present disclosure, an antenna device is adopted, including: a shielding device, which at least includes a first part made of a material capable of shielding a wireless signal, the shielding device being moveable, wherein the first part shields an antenna when located at a first position, making the antenna unable to receive and/or transmit a signal; the antenna works normally when the first part is moved out of the first position. The present disclosure solves the problem in related art that the communication security of NFC can be implemented through software only, thereby enhancing security from a hardware perspective.

### Brief Description of the Drawings

For a better understanding of the present disclosure, accompanying drawings described hereinafter are provided to constitute one part of the application; the schematic embodiments of the present disclosure and the description thereof are used to illustrate the present disclosure but to limit the present disclosure improperly. In the accompanying drawings:
Fig. 1 is a diagram of a shielding device working system according to the preferred embodiment of the present disclosure;
Fig. 2 is a structure diagram of a security device according to the preferred embodiment of the present disclosure;
Fig. 3 is a diagram of the front surface of a mobile phone according to the preferred embodiment of the present disclosure;
Fig. 4 is a diagram of the back surface of a mobile phone according to the preferred embodiment of the present disclosure;
Fig. 5 is a diagram of a mobile phone in the default protection state according to the preferred embodiment of the present disclosure; and
Fig. 6 is a diagram of a mobile phone in the NFC communication state according to the preferred embodiment of the present disclosure.

### Detailed Description of the Embodiments

It should be noted that the embodiments in the application and the characteristics of the embodiments can be combined if no conflict is caused. The present disclosure is described below in detail by reference to the accompanying drawings in conjunction with embodiments.

In this embodiment, an antenna device is provided, including: a shielding device, which might include a first part made of a material capable of shielding a wireless signal, the shielding device being moveable, wherein the first part shields an antenna when located at a first position, making the antenna unable to receive and/or transmit a signal; the antenna works normally when the first part is moved out of the first position.

With the above antenna device, an antenna can be shielded through hardware, thereby being unable to perform communication. When it is needed to use this antenna, a user just moves the above shielding device to make the antenna able to work, and at other times moves the shielding device to shield the antenna, thereby inhibiting the use of the antenna from a hardware perspective, solving the problem in related art that the communication security of NFC can be implemented through software only, and hereby enhancing security from the hardware perspective.

A part used for enhancing the antenna is added to the shielding device, that is to say, the shielding device further includes: a second part made of a material capable of enhancing a wireless signal, which enhances the reception and/transmission of signal of the antenna when located at the first position and enhances the magnetic field of the antenna. Through the combination of the second part and the first part, the antenna device not only can shield an antenna but also can enhance the antenna, with multiple functions.

In the shielding device the first part and the second part are connected, thereby realizing the linkage between the first part and the second part. The shielding device further includes: a moving device, which is used to move the connected first part and second part, so that the first part is moved out of the first position when the second part is moved on the first position.

The above moving device can be realized by means of a sliding support. In a preferred implementation, the moving device might include: a sliding support, on which the first part and the second part are disposed; a moving component, which is connected with the sliding support and is used to receive an external force to move the sliding support. Through this preferred embodiment, free movement is realized for the shielding device, which is convenient for a user to use.

In the above embodiment and preferred implementation, a first position is involved; preferably, the first position might be located above the antenna, achieving a better shielding effect for the antenna.

In the above embodiment and preferred implementation, the first part involved might be a metallic film and the second part involved might be a magnetic film, wherein the metallic film can shield the electromagnetic wave transmitted or received by the antenna while the magnetic film can enhance the electromagnetic field of the antenna; both films are easy to manufacture.

In this embodiment, a terminal is provided, including: an antenna and an antenna device. This antenna device has the same function as the above antenna device, and no further description is needed here. With this terminal, the antenna can be shielded through hardware, thereby being unable to perform communication. When it is needed to use this antenna, a user just moves the above shielding device to make the antenna able to work, and at other times moves the shielding device to shield the antenna, thereby inhibiting the use of the antenna from a hardware perspective, solving the problem in related art that the communication security of NFC can be implemented through software only, and hereby enhancing security from the hardware perspective.

The antenna device and the antenna can be arranged at corresponding positions on the terminal as needed. In this embodiment, a preferred setting mode is provided, in which the antenna device is located between the back cover of the terminal and the antenna.

In another preferred implementation, a sliding groove might be provided on the back cover; a switch part of the moving component is located in the sliding groove, and the switch part can move along the sliding groove after receiving an external force, thereby moving the sliding support.

The above antenna is an NFC antenna; of course, the above embodiment and preferred implementation also can be applied to other types of antennas, with the same effect.

The present disclosure is described below in conjunction with preferred embodiments and implementations.

### Preferred Embodiment 1

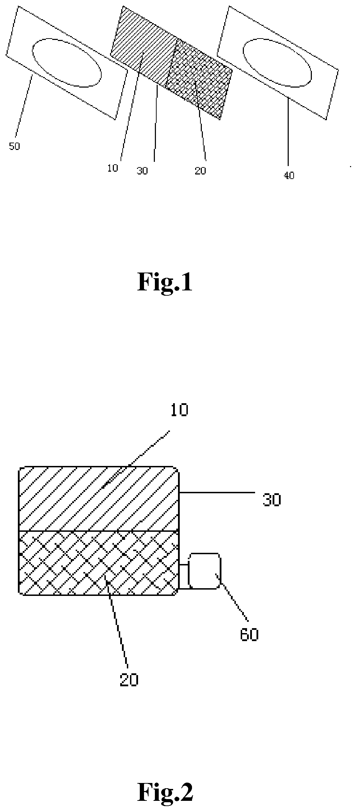

Fig. 1 is a diagram of a shielding device working system according to the preferred embodiment of the present disclosure; as shown in Fig. 1, the shielding device working system includes: a magnetic film 10, a metallic film 20, a metallic support 30, a terminal device antenna 40 and an active device antenna 50, wherein the magnetic film 10, the metallic film 20 and the metallic support 30 compose a preferred implementation of the above antenna device. The system is described below in detail.

The terminal device antenna 40 can be an NFC antenna carried by the terminal; the active device antenna 50 can be an external fee deduction device, for example, bus/subway punch machine, electronic credit-card reader and the like.

In this preferred embodiment the magnetic film 10 and the metallic film 20 are fixed on a metallic support 30; the metallic support 30 might be a slideable metallic support, of which the position can be controlled by a user through a peripheral device (for example, mechanical switch). When a user needs to use the NFC function, he/she moves the magnetic film 10 to between the terminal device antenna 40 and the active device antenna 50, to enhance the magnetic field of the terminal device antenna 40; if the performance of the terminal device antenna 40 is normal, the terminal device antenna 40 can receive a message from the active device, thereby completing the payment function. When the user does not need the NFC function, he/she moves the metallic film 20 to between the terminal device antenna 40 and the active device antenna 50, then the terminal device antenna 40 is shielded and cannot receive a message from the active device.

This preferred embodiment provides a physical security protection method, in which all payments need to decrypt keys physically, thereby fundamentally preventing the occurrence of error deduction of fee.

### Preferred Embodiment 2

This preferred embodiment provides a structure of a security protection device; Fig. 2 is a structure diagram of a security device (which is another preferred embodiment of the above antenna device) according to the preferred embodiment of the present disclosure; as shown in Fig. 2, the security device 70 includes: a magnetic film 10, a metallic film 20, a metallic support 30 and a switch 60, wherein the magnetic film 10, the metallic film 20 and the metallic support 30 have the same function as the magnetic film 10, the metallic film 20 and the metallic support 30 shown in Fig. 1, and no further description is needed here. The structure is described below in detail.

As shown in Fig. 2, the magnetic film 10 and the metallic film 20 are connected and are fixed on the metallic support 30; the switch 60 is arranged on the metallic support 30.

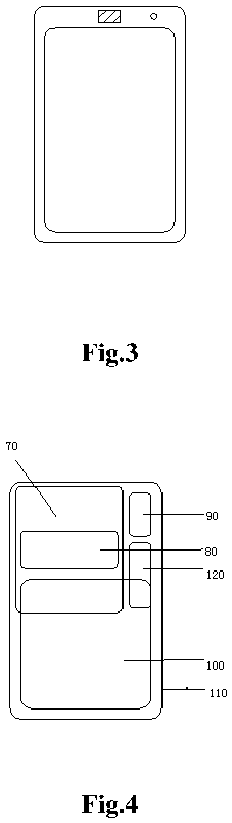

This preferred embodiment provides a terminal having an NFC function with a security protection device. Fig. 3 is a diagram of the front surface of a mobile phone according to the preferred embodiment of the present disclosure; Fig. 4 is a diagram of the back surface of a mobile phone according to the preferred embodiment of the present disclosure; as shown in Fig. 4, the back surface of the mobile phone includes: a security device 70, an NFC antenna 80, a camera 90, a battery 100, a back cover 110 and a switch sliding groove 120, wherein the security device has the same structure as the security device 70 above, and no further description is needed here. The back surface of the mobile phone is described below in detail.

The NFC antenna 80 is separated from the back cover 110 in design; there is a small cavity reserved between the NFC antenna 80 and the back cover 110, to install the security device 70. A switch sliding groove 120 is provided on (not limited to) the back cover 110, which is used to control the switch of the security device.

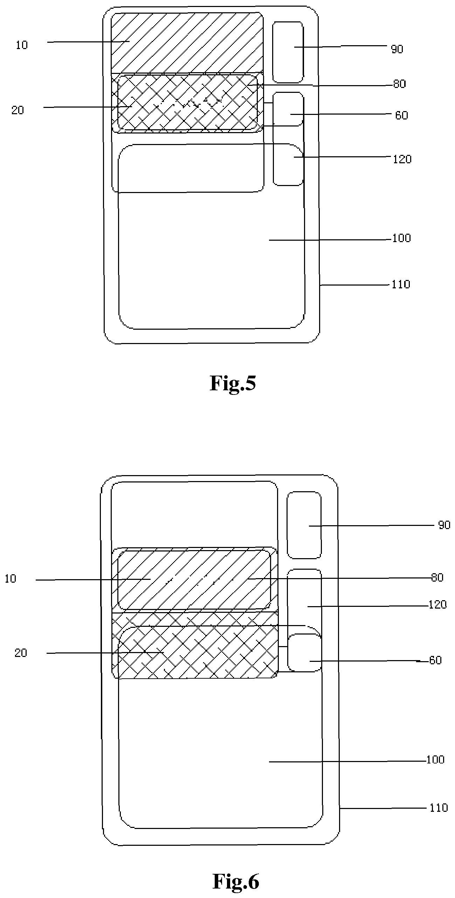

Fig. 5 is a diagram of a mobile phone in the default protection state according to the preferred embodiment of the present disclosure; as shown in Fig. 5, the mobile phone is in a security protection state by default; by sliding the switch 60 located in the switch sliding groove 120 (the switch 60 being arranged on the security device 70), the security device 70 is moved to the upper end, then the metallic film 20 is located above the NFC antenna 80, in this way, the mobile phone NFC antenna 80 (which generally is a circular coil) is covered by a layer of metallic film 20 that has a shielding function, then the NFC antenna 80 cannot work, but the user terminal can use other functions normally and can avoid the error deduction of fee caused by the interference from other devices.

Fig. 6 is a diagram of a mobile phone in the NFC communication state according to the preferred embodiment of the present disclosure. As shown in Fig. 6, when a user needs to use the NFC function, he/she can move the security device 70 to the lower end and place the magnetic film 10 above the NFC antenna 80 by sliding the switch 60 located in the switch sliding groove 120; in this way, by sliding the mechanical switch 60 arranged outside the mobile phone, the flexible films connected inside the mobile phone start to slide, then the NFC antenna 80 is covered by a layer of magnetic film 10, the NFC antenna 80 can be magnetically coupled with an external antenna, the user can use this mobile phone to perform NFC communication, thereby completing the payment function.

After the use of the NFC function is completed, the user can select to continue to pay, only if the terminal keeps the position shown in Fig. 6; or, the user can select to stop using, and at this time only if the terminal is returned to the state shown in Fig. 5, the NFC function can be completely interrupted. Due to complete mechanical control, the state of the NFC terminal is irrelevant to whether the mobile phone has power; NFC operation can be conducted when the mobile phone is powered off or in a sleep state, with security and applicability enhanced.

The adoption of the structure of the preferred embodiment can effectively protect the security of NFC payment and prevent the occurrence of error deduction of fee. Meanwhile, the structure provided with a switch can bring a sense of security to a user when he/she uses mobile payment, thereby promoting services such as mobile payment.

### Industrial Applicability

Through the embodiment of the present disclosure, an antenna device is adopted, including: a shielding device, which at least includes a first part made of a material capable of shielding a wireless signal, the shielding device being moveable, wherein the first part shields an antenna when located at a first position, making the antenna unable to receive and/or transmit a signal; the antenna works normally when the first part is moved out of the first position. The present disclosure solves the problem in related art that the communication security of NFC can be implemented through software only, thereby enhancing security from a hardware perspective.

## Claims

1. An antenna device, which comprises:
an antenna (80) and a shielding device (70), which at least comprises a first part (20) made of a material capable of shielding a wireless signal, and the shielding device (70) being moveable, wherein the first part (20) shields the antenna (80) when located at a first position, making the antenna (80) unable to receive and/or transmit a signal; the antenna works normally when the first part is moved out of the first position, **characterized in that**,
the shielding device (70) further comprises: a second part (10) made of a material capable of enhancing a wireless signal, which enhances the reception and/transmission of signal of the antenna (80) when located at the first position,
wherein the first part (20) is connected with the second part (10); the shielding device (70) further comprises: a moving device, which is configured to move the connected first part (20) and second part (10), such that the first part (20) is moved out of the first position the second part (10) is moved on the first position.

2. The antenna device according to claim 1, wherein the moving device comprises:
a sliding support (30), on which the first part and the second part are disposed;
a moving component (60), which is connected with the sliding support and is used to receive an external force to move the sliding support.

3. The antenna device according to any one of claims 1 to 2, wherein the first position (20) is located above the antenna (80).

4. The antenna device according to any one of claims 1 to 2. wherein the first part (20) is a metallic film, and/or the second part (10) is a magnetic film.

5. A terminal, comprising the antenna device as claimed in any one of claims 1 to 4.

6. The terminal according to claim 5, wherein
the terminal further comprises: a back cover (110);
the shielding device (70) is located between the back cover (110) and the antenna (80).

7. The terminal according to claim 5, wherein
a sliding groove (120) is provided on the back cover;
a switch part of the moving component is located in the sliding groove, and the switch part can move along the sliding groove after receiving an external force, thereby moving the sliding support.

8. The terminal according to any one of claims 5 to 7, wherein the antenna is an NFC antenna.

## Patentansprüche

1. Antennenvorrichtung, welche umfasst:
eine Antenne (80), und
eine Abschirmvorrichtung (70), die mindestens einen ersten Teil (20) umfasst, der aus einem Material gefertigt ist, das fähig ist, ein drahtloses Signal abzuschirmen, und wobei die Abschirmvorrichtung (70) beweglich ist, wobei der erste Teil (20), wenn er sich an einer ersten Position befindet, die Antenne (80) abschirmt, was es der Antenne (80) unmöglich macht, ein Signal zu empfangen und/oder zu übertragen; die Antenne normal funktioniert, wenn der erste Teil aus der ersten Position herausbewegt wird,
**dadurch gekennzeichnet, dass**
die Abschirmvorrichtung (70) weiter umfasst: einen zweiten Teil (10), der aus einem Material gefertigt ist, das fähig ist, ein drahtloses Signal zu verstärken, der, wenn er sich an der ersten Position befindet, den Signalempfang und/oder -übertragung der Antenne (80) verstärkt,
wobei der erste Teil (20) mit dem zweiten Teil (10) verbunden ist; die Abschirmvorrichtung (70) weiter umfasst: eine Bewegungsvorrichtung, die dazu konfiguriert ist, den verbundenen ersten Teil (20) und zweiten Teil (10) derart zu bewegen, dass der erste Teil (20) aus der ersten Position herausbewegt wird, wenn der zweite Teil (10) an die erste Position bewegt wird.

2. Antennenvorrichtung nach Anspruch 1, wobei die Bewegungsvorrichtung umfasst:
eine Gleitstütze (30), auf der der erste Teil und der zweite Teil angeordnet sind;
eine Bewegungskomponente (60), die mit der Gleitstütze verbunden ist und dazu verwendet wird, eine Kraft von außen aufzunehmen, um die Gleitstütze zu bewegen.

3. Antennenvorrichtung nach einem der Ansprüche 1 bis 2, wobei sich die erste Position (20) über der Antenne (80) befindet.

4. Antennenvorrichtung nach einem der Ansprüche 1 bis 2, wobei es sich beim ersten Teil (20) um einen Metallfilm handelt, und/oder beim zweiten Teil (10) um einen Magnetfilm handelt.

5. Endgerät, das die Antennenvorrichtung nach einem der Ansprüche 1 bis 4 umfasst.

6. Endgerät nach Anspruch 5, wobei
das Endgerät weiter umfasst: eine hintere Abdeckung (110) ;
sich die Abschirmvorrichtung (70) zwischen der hinteren Abdeckung (110) und der Antenne (80) befindet.

7. Endgerät nach Anspruch 5, wobei
an der hinteren Abdeckung eine Gleitnut (120) bereitgestellt ist;
sich in der Gleitnut ein Schaltteil der Bewegungskomponente befindet, und sich der Schaltteil nach Aufnahme einer Kraft von außen entlang der Gleitnut bewegen kann, wodurch er die Gleitstütze bewegt.

8. Endgerät nach einem der Ansprüche 5 bis 7, wobei es sich bei der Antenne um eine NFC-Antenne handelt.

## Revendications

1. Dispositif d'antenne, qui comprend :
une antenne (80) et
un dispositif écran de blindage (70), qui comprend au moins une première partie (20) faite d'un matériau capable de faire écran à un signal sans fil, et le dispositif écran de blindage (70) étant mobile, dans lequel la première partie (20) protège l'antenne (80) lorsqu'elle est située à une première position, rendant l'antenne (80) inutilisable pour recevoir et/ou émettre un signal ; l'antenne fonctionne normalement lorsque la première partie est sortie de la première position,
**caractérisé en ce que**,
le dispositif écran de blindage (70) comprend en outre : une seconde partie (10) faite d'un matériau capable d'augmenter un signal sans fil, qui augmente la réception et/ou l'émission d'un signal de l'antenne (80) lorsqu'elle est située à la première position,
dans lequel la première partie (20) est connectée à la seconde partie (10) ; le dispositif écran de blindage (70) comprend en outre : un dispositif mobile, qui est configuré pour déplacer la première partie (20) et la seconde partie (10) connectées de sorte que la première partie (20) est sortie de la première position lorsque la seconde partie (10) est amenée à la première position.

2. Dispositif d'antenne selon la revendication 1, dans lequel le dispositif mobile comprend :
un support coulissant (30), sur lequel la première partie et la seconde partie sont disposées ;
un composant mobile (60), qui est connecté au support coulissant et est utilisé pour recevoir une force externe pour déplacer le support coulissant.

3. Dispositif d'antenne selon l'une quelconque des revendications 1 à 2, dans lequel la première position (20) est située au-dessus de l'antenne (80).

4. Dispositif d'antenne selon l'une quelconque des revendications 1 à 2, dans lequel la première partie (20) est un film métallique et/ou la seconde partie (10) est un film magnétique.

5. Terminal, comprenant le dispositif d'antenne selon l'une quelconque des revendications 1 à 4.

6. Terminal selon la revendication 5, dans lequel le terminal comprend en outre : un couvercle arrière (110) ;
le dispositif écran blindage (70) est situé entre le couvercle arrière (110) et l'antenne (80).

7. Terminal selon la revendication 5, dans lequel
une gorge de coulissement (120) est disposée sur le couvercle arrière ;
une pièce de commutation du composant mobile est située dans la gorge de coulissement et la pièce de commutation peut se déplacer le long de la gorge de coulissement après la réception d'une force externe, déplaçant de cette façon le support coulissant.

8. Terminal selon l'une quelconque des revendications 5 à 7, dans lequel l'antenne est une antenne NFC.
